# EUROPEAN PATENT APPLICATION

(11) **EP 4 140 663 A1**
(43) Date of publication of application: **01.03.2023**
(21) Application number: 21192507.8
(22) Date of filing: 23.08.2021
(51) Int. Cl.: B25J 9/16, G05B 19/418

(54) **METHOD, ASSEMBLY-SUPPORT-UNIT AND ASSEMBLY ARRANGEMENT FOR AUTOMATION MACHINE-BASED EQUIPPING A SWITCHING CABINET OR SERVER RACK WITH PLACEMENT MODULES OR MAINTAINING THE PLACEMENT MODULES**

(71) Applicant: Siemens Aktiengesellschaft, 80333 München (DE)
(72) Inventor: Wirnshofer, Florian, 80939 München (DE); Dietrich, Vincent, 80639 München (DE); Schmitt, Philipp Sebastian, 80797 München (DE)

(57) **Abstract**

In order to equip autonomously without any human intervention and automation machine-based a switching cabinet (SWC) or server rack (SVR) with placement modules (PLM) or maintaining the placement modules, by which firstly the switching cabinet or server rack includes each at least one mounting rail (MR, HR, DIN-R) for mounting the placement modules, and secondly for placing the modules (PLM) at least one control unit-controlled automation machine (AMA) is provided with geometric data (GMD) and layout data (LOD) of the switching cabinet or server rack or possibly or if needed meta-information (MIF) of the switching cabinet or server rack and the mounted modules, it is proposed to mount (mnt) in a force- and form-fitting connection (FFFC) with the mounting rail as part of the switching cabinet or server rack a calibration-marker-module (CMM) with an automation machine-detectable marker (MK_{amad}) (**i**) specifying due to the mounting a 6D-pose in position and orientation of the mounted calibration-marker-module (CMM), (ii) marking due to the marker the position and orientation of the calibration-marker-module mounted onto the mounting rail for a detection by the automation machine, (iii) calibrating the automation machine due to the detection for mounting the placement modules in the course of equipping the switching cabinet or server rack exactly at a mounting location determined by mounting location data (MLD) referenced to all relative coordinate transformations (RCT) between the calibration-marker-module and the placement modules and based on pose data (PD) corresponding to the 6D-pose, the geometric data and the layout data and possibly or if needed the meta-information (MIF).

## Description

The invention refers to a method for automation machine-based equipping a switching cabinet or server rack with placement modules or maintaining the placement modules according to the preamble claim 1, an assembly-support-unit for automation machine-based equipping a switching cabinet or server rack with placement modules or maintaining the placement modules according to the preamble claim 7 and an assembly arrangement for automation machine-based equipping a switching cabinet or server rack with placement modules or maintaining the placement modules according to the preamble claim 13.

As of today, at least one autonomous assembly or autonomous equipment and autonomous maintenance of server racks or switching cabinets, in particular when they are of largescale, with placement modules, such as electric or electronic components, is not possible for an automation machine, e.g. a robot, a gantry or delta robot. This is because, the location of the placement modules is not known to the automation machine. Yet, the requirements of localization precision are very high.

There exists a vast increase in digitalization and cloudbased solutions for various technical domain such as industry, telecommunication, energy distribution, medical supplies etc. As a result, the need for the corresponding hardware infrastructure is also increasing - most notably, the need of application-dependent switching cabinets or server racks.

To automate both the assembly or equipment of the placement modules, but also the maintenance of the placement modules by automation machines, these would have to determine the exact position and type of all modules to be equipped or assembled in the switching cabinet or server rack as the module tolerances are very small. Since this is too time-consuming with the current solutions and does not generalize across different switching cabinets or server racks, the assembly or equipment respectively the maintenance of the switching cabinets or server racks is currently done exclusively with the help of manual work.

Assembly or equipment processes are usually automated by constructing special-purpose assembly machines. These machines are tailored to one product. Production therefore becomes economic for large lot-sizes only.

However, switching cabinets or server racks are typically produced in very small batch sizes or even as single-unit products. Therefore, the assembly or equipment respectively the maintenance are currently done manually by hand.

It is an objective of the invention to propose a method, an assembly-support-unit and an assembly arrangement for automation machine-based equipping a switching cabinet or server rack with placement modules or maintaining the placement modules, by which the automation machine-based equipment or maintenance is enabled autonomously without any human intervention.

This objective is solved with regard to a method defined in the preamble of claim 1 by the features in the characterizing part of claim 1.

The objective is further solved with regard to an assembly-support-unit defined in the preamble of claim 7 by the features in the characterizing part of claim 7.

Moreover the objective is solved with regard to an assembly arrangement defined in the preamble of claim 13 by the features in the characterizing part of claim 13.

The main idea of the invention according to the claims 1, 7 and 13 - in order to equip automation machine-based a switching cabinet or server rack with placement modules or maintaining the placement modules, by which firstly the switching cabinet or server rack includes each at least one mounting rail, in particular a hat-rail or DIN-rail, for mounting the placement modules and secondly for placing the modules at least one control unit-controlled automation machine is provided with **either** geometric data and layout data of the switching cabinet or server rack **or** geometric data and layout data of the switching cabinet or server rack as well as meta-information of the switching cabinet or server rack SVR and the mounted modules, - is to mount in a force- and form-fitting connection with the mounting rail as part of the switching cabinet or server rack a calibration-marker-module with, in particular on its surface, an automation machine-detectable marker
- specifying due to the mounting a 6D-pose in position and orientation of the mounted calibration-marker-module,
- marking due to the marker the position and orientation of the calibration-marker-module mounted onto the mounting rail for a detection by the automation machine,
- calibrating the automation machine due to the detection of the calibration-marker-module for mounting the placement modules in the course of equipping the switching cabinet or server rack exactly at a mounting location determined by mounting location data referenced to all relative coordinate transformations between the calibration-marker-module and the placement modules mounted onto the mounting rail and based on, in particular due to data combining, pose data corresponding to the 6D-pose, the geometric data and the layout data or pose data corresponding to the 6D-pose, the geometric data and the layout data and the meta-information.

The presented approach enables a control unit-controlled automation machine, e.g. a control unit-controlled robot, to immediately, with just one look, retrieve a precise location (desired, or current) of all parts, such as the placement modules to be equipped or being equipped, of the switching cabinet/server rack. This way the control unit-controlled automation machine respectively the control unit-controlled robot, can assemble or equip the switching cabinet/server rack or perform maintenance on the parts respectively the modules.

An integration with digital system tools for cabinet/rack design providing corresponding digital twin data can further enable the machine/the robot to infer additional information such as part/module status, replacement schedule, etc. Given this type of information augmentation, it becomes possible to assemble entire switching cabinets/server racks without costly manual intervention.

The described approach is designed for the special calibration-marker-module mounted for example onto a hat-rail or DIN-rail for supporting the equipment or assembling of switching cabinets/server racks with the placement modules. The calibration-marker-module gets for example clamped in in a force- and form-fitting manner onto the mounting rail. Once in place, all locations of relevant placement modules or parts are immediately available with sufficient precision such that it becomes possible for the control unit-controlled automation machine respectively the control unit-controlled robot either to assemble or equip the placement module respectively the part or to perform maintenance by replacing a placement module respectively a part being defective.

Another aspect of the presented approach is the massive potential that comes with combining (e.g. by data combing) it with the cited digital system tools designing the switching cabinet/server rack to be equipped or assembled with placement modules in software as a digital twin. Once this digital representation is done and available, the special calibration-marker-module is placed inside switching cabinet/server rack. With switching cabinet/server rack in place, the control unit-controlled automation machine respectively the control unit-controlled robot can assemble or equip the entire switching cabinet/server rack without further human intervention.

One advantage of the proposed approach is that it is not necessary to construct a special-purpose assembly/equipment line for the switching cabinet respectively the server rack. This is not really viable since switching cabinets or server racks are heavily use-case specific, customized products.

The present approach differs from other marker-based solutions, where a marker gets placed somewhere in the switching cabinet or the server rack and which is not is not a mounting, e.g. a hat-rail, component. Such a solution requires manual calibration of the offset between the marker and the top-hat rail. This is cumbersome. For this reason, the assembly/equipment of low-volume or high-mix switching cabinet/server racks is rarely autonomously automated, but they are assembled by hand.

Further advantageous developments of the invention are specified and given in the dependent claims. So according to the claims 2 and 8 it would be an advantage for a quick assembly if the calibration-marker-module is clamped onto the mounting rail.

Furthermore it would be advantageous according to the claims 3 and 9 if the geometric and layout data and possibly or if needed the meta-information is made available by an assembly data repository for preferably accesses of a control unit of the control unit-controlled automation machine, which is according to the claims 6 and 12 preferably designed as a control unit-controlled robot, gantry or delta robot.

In addition according to the claims 4 and 10, the invention is advantageously distinguished by the calibration-marker-module including besides the automation machine-detectable marker an automation machine-scannable code, which is applied preferably for a scanning through a code-reader of the automation machine on a surface of the calibration-marker-module *(cf. claim 15).* At this point it should be mentioned regarding the automation machine-detectable marker that this marker, which is applied also preferably on a surface of the calibration-marker-module, is detected through a camera of the automation machine (*cf. claim 14*)*.*

The automation machine-scannable code is preferably a "Quick response <QR>"-code including a reference information, such for example a link, which, when the code is scanned by the control unit-controlled automation machine, is used by the control unit for accessing the geometric and layout data and possibly or if needed the meta-information.

Moreover according to the claims 5 and 11 and in the course of maintaining the placement modules a replacement module, which is defective, is replaced autonomously without any human intervention by the control unit-controlled automation machine.

Besides the above, advantageous further developments of the invention arise out of the following description of a preferred embodiment of the invention according to FIGURES 1 to 4. They show:
FIGURE 1 a section of a switching cabinet with placement modules mounted onto three mounting rails from above,
FIGURE 2 a further section of the switching cabinet with an assembly-support-unit mounted onto a mounting rail from above,
FIGURE 3 a side view on the assembly-support-unit mounted onto the mounting rail according to the FIGURE 2,
FIGURE 4 a construction of an assembly arrangement for automation machine-based equipping the switching cabinet with placement modules when loaded.

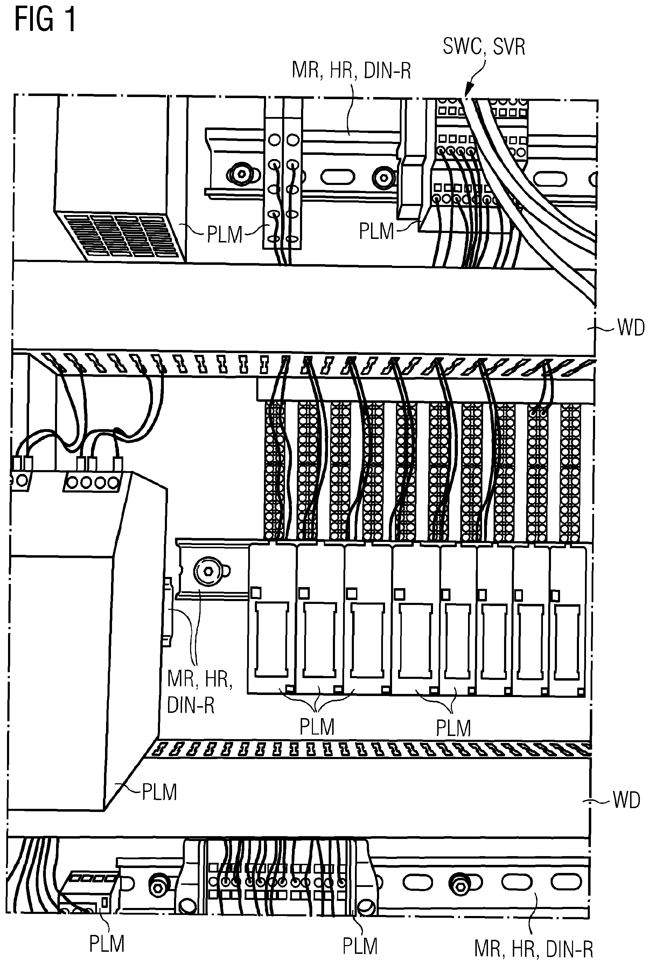

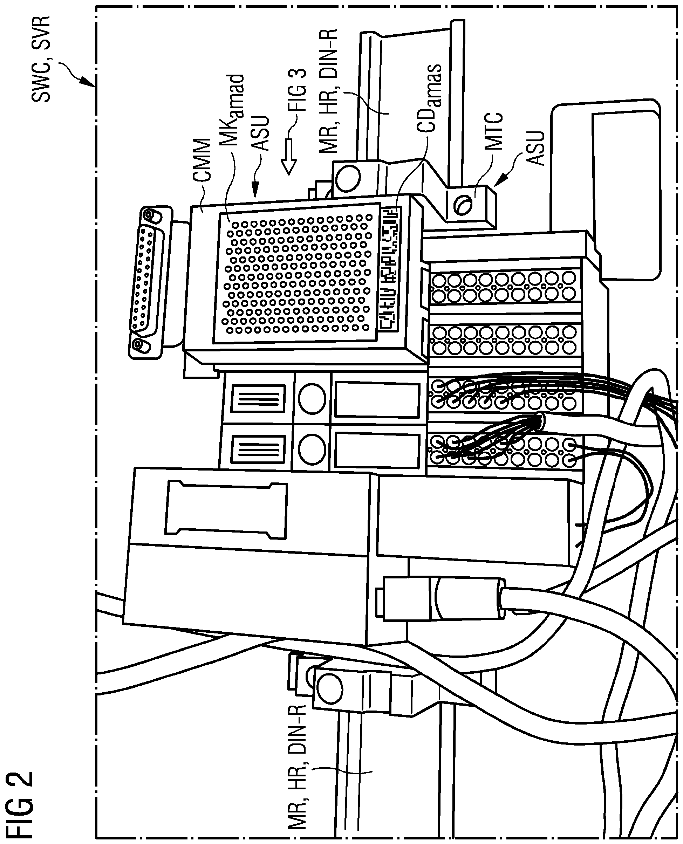

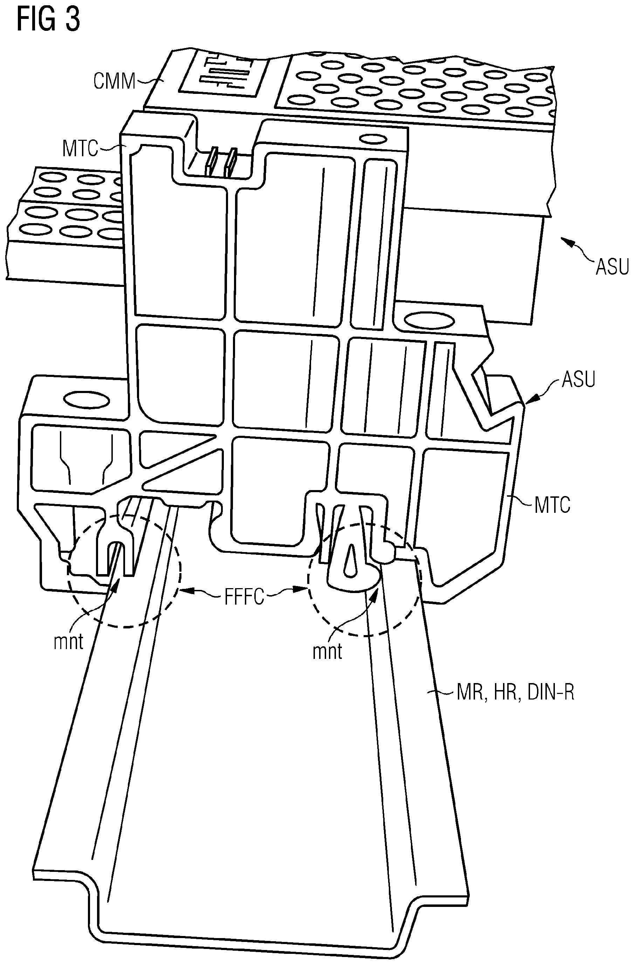

FIGURE 1 shows a section of a switching cabinet SWC with placement modules PLM mounted onto three mounting rails MR from above. The three mounting rails MR, which are preferably designed each as hat-rails HR or DIN-rails DIN-R, are mounted on a back wall of the switching cabinet SWC and separated each by a wiring duct WD. The placement modules PLM mounted onto the mounting rails MR, HR, DIN-R are preferably electric or electronic components as depicted in the FIGURE 1. How the placement modules PLM are mounted onto the three mounting rails MR, HR, DIN-R can be seen exemplary (as one of various ways or examples how to mount a module) in FIGURE 3, although the cited FIGURE 3 shows a mounting component used for a calibration-marker-module according to FIGURE 2.

Instead of the switching cabinet SWC depicted in the FIGURE it also possible that a server rack SVR is used for the equipment or the assembly with the placement modules PLM onto the three mounting rails MR, HR, DIN-R.

FIGURE 2 shows a further section of the switching cabinet/server rack SWC, SVR with an assembly-support-unit ASU mounted onto a further mounting rail MR, HR, DIN-R or onto one of the three mounting rails MR, HR, DIN-R from above. The assembly-support-unit ASU includes a mounting component MTC and a calibration-marker-module CMM being functionally connected.

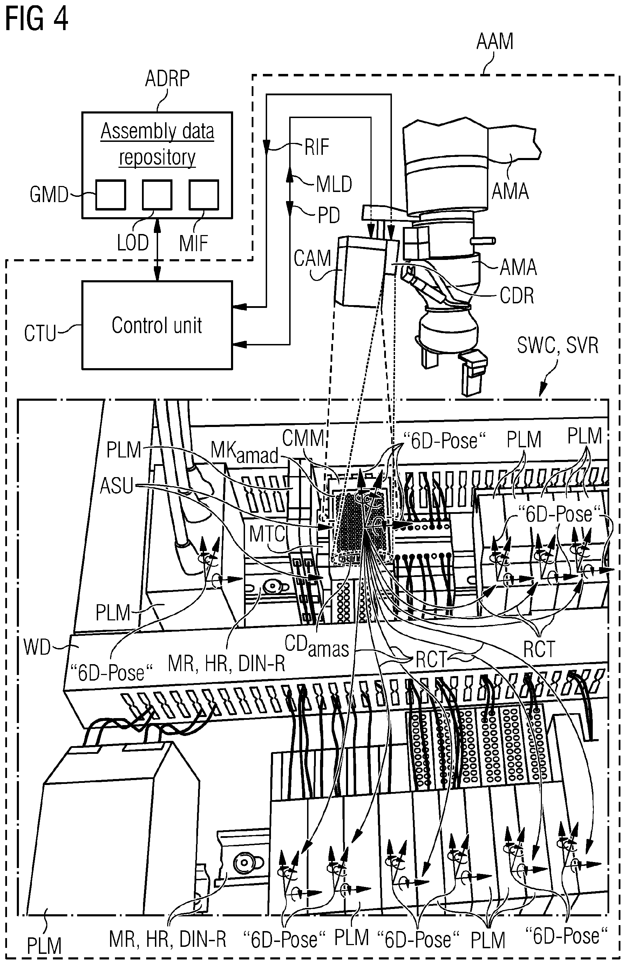

The calibration-marker-module CMM includes preferably on its surface an automation machine-detectable marker MK_{amad} and an automation machine-scannable code CDₐₘₐₛ. How the automation machine-detectable marker MK_{amad} and the automation machine-scannable code CDₐₘₐₛ are used according to the preferred embodiment of the invention will described later with regard to FIGURE 4.

FIGURE 3 shows a side view on the assembly-support-unit ASU according to the FIGURE 2 with the mounting component MTC and the calibration-marker-module CMM and how the assembly-support-unit ASU is mounted with the aid of the mounting component MTC onto the mounting rail MR, HR, DIN-R. According to this side view the assembly-support-unit ASU with the calibration-marker-module CMM is mounted mnt in a force- and form-fitting connection FFFC with the mounting rail MR, HR, DIN-R via the mounting component MTC onto the mounting rail MR, HR, DIN-R as part of the switching cabinet SWC or server rack SVR. The in the force- and form-fitting connection FFFC with the mounting rail MR, HR, DIN-R is preferably realized such that the mounting component MTC is designed as a clamping device by which the assembly-support-unit ASU respectively the calibration-marker-module CMM is clamped onto the mounting rail MR, HR, DIN-R.

FIGURE 4 shows a construction of an assembly arrangement AAM for automation machine-based equipping or assembling the switching cabinet/server rack SWC, SVR with the placement modules PLM when loaded. According to the section of the switching cabinet/server rack SWC, SVR depicted in the FIGURE 4 there are two mounting rails MR, HR, DIN-R mounted on the back wall of the switching cabinet/server rack SWC, SVR, which are again separated each by the wiring duct WD.

Onto one of the two mounting rails MR, HR, DIN-R (in FIGURE 4 the lower mounting rail) there are mounted the placement modules PLM. The mounting is preferably realized each as with the calibration-marker-module CMM of the assembly-support-unit ASU according to the FIGURES 2 and 3.

Onto the other of the two mounting rails MR, HR, DIN-R (in FIGURE 4 the upper mounting rail) there are mounted further placement modules PLM and the assembly-support-unit ASU with the calibration-marker-module CMM including on its surface the automation machine-detectable marker MK_{amad} and the automation machine-scannable code CDₐₘₐₛ. The mounting also here is preferably realized each as with the assembly-support-unit ASU with the calibration-marker-module CMM according to the FIGURES 2 and 3.

In order to equip or assemble, automation machine-based, the switching cabinet/server rack SWC, SVR with the placement modules PLM it is provided according to the assembly arrangement AAM depicted in the FIGURE 4 a control unit-controlled automation machine AMA. However, as a modification it is also possible that more than one control unit-controlled automation machine AMA is used for the equipment or assembling. For the said purpose the control unit-controlled automation machine AMA is preferably each a control unit-controlled robot, gantry or delta robot.

The control unit-controlled automation machine AMA is connected with a control unit CTU, which controls inter alia all motion sequences of the control unit-controlled automation machine AMA for the automation machine-based equipping or assembling of the switching cabinet/server rack SWC, SVR with the placement modules PLM. For carrying out this equipping or assembling of the switching cabinet/server rack SWC, SVR the control unit CTU as part of the assembly arrangement AAM is connected with or assigned to an assembly data repository ADRP.

According to this connection or assignment the control unit CTU is able to access either geometric data GMD and layout data LOD of the switching cabinet/server rack SWC, SVR or geometric data GMD and layout data LOD of the switching cabinet/server rack SWC, SVR and meta-information MIF of the switching cabinet/server rack SWC, SVR and the mounted modules PLM. The meta-information MIF for example may include information other than the geometric and layout data as such, e.g. the type of the placement module and the switching cabinet/server rack with the stipulation "Where is what?".

The assembly data repository ADRP is a part of a digital system tool (in the FIGURE 4 not depicted), in which the geometric and layout data GMD, LOD and the meta-information MIF are stored. At least the geometric and layout data GMD, LOD are digital twin-based data provided by the digital system tool, when the switching cabinet/server rack SWC, SVR to be equipped or assembled with placement modules PLM in software as a digital twin.

In the course of equipping or assembling of the switching cabinet/server rack SWC, SVR with the placement modules PLM the control unit-controlled automation machine AMA is now provided via the control unit CTU either with the geometric and layout data GMD, LOD of the switching cabinet/server rack SWC, SVR respectively the mounted modules PLM or the geometric and layout data GMD, LOD and the meta-information MIF of the switching cabinet/server rack SWC, SVR and the mounted modules PLM.

The automation machine AMA controlled not least regarding the motion sequences by the control unit CTU includes for the equipping or assembling of the switching cabinet/server rack SWC, SVR with the placement modules PLM a camera CAM and a code-reader CDR. When the automation machine AMA due to the controlling of the control unit CTU is moved towards the assembly-support-unit ASU and due to this movement the camera CAM and the code-reader CDR of the automation machine AMA are positioned above the calibration-marker-module CMM with the automation machine-detectable marker MK_{amad} and the automation machine-scannable code CDₐₘₐₛ, the camera CAM detects the automation machine-detectable marker MK_{amad} (e.g.by using detection software to recognize an information for a rough initial, sufficient location estimation of the calibration-marker-module CMM) and the code-reader CDR scans the automation machine-scannable code CDₐₘₐₛ.

Due to the fact that the assembly-support-unit ASU is mounted onto the mounting rail MR, HR, DIN-R as described above and depicted according to the FIGURE 2, 3 and 4 the calibration-marker-module CMM with the automation machine-detectable marker MK_{amad} specifies due to the mounting a 6D-pose in position and orientation of the mounted calibration-marker-module CMM on the mounting rail MR, HR, DIN-R and marks with the marker MK_{amad} the position and orientation of the calibration-marker-module CMM mounted onto the mounting rail MR, HR, DIN-R. The automation machine-detectable marker MK_{amad} is preferably used for camera-based 6 Degree-of-Freedom pose estimation.

With the detected 6D-pose pose data PD are generated and inputted via the connection between the automation machine AMA and the control unit CTU into the control unit CTU.

In order to calibrate the automation machine AMA due to the detection of the calibration-marker-module CMM for mounting - autonomously without any human intervention - the placement modules PLM in the course of equipping or assembling the switching cabinet/server rack SWC, SVR exactly at a mounting location, where they should equipped or assembled, the control unit CTU determines mounting location data MLD referenced to all relative coordinate transformations RCT between the calibration-marker-module CMM and the placement modules PLM mounted onto the two mounting rails MR, HR, DIN-R. These mounting location data MLD are based on pose data PD corresponding to the 6D-pose, the geometric data GMD and the layout data LOD, the control unit CTU has access to. Alternatively, the mounting location data MLD are based on the pose data PD corresponding to the 6D-pose, the geometric data GMD and the layout data LOD and the meta-information MIF the control unit CTU has access to.

This access can be realized in different ways. Firstly, it is possible to program the control unit CTU in the context of deploying the digital system tool accordingly or secondly it is possible to enable the access via an information residing on the calibration-marker-module CMM and transferred via the automation machine AMA to the control unit CTU.

For this purpose the automation machine-scannable code CDₐₘₐₛ, which includes a reference information RIF, e.g. a link, which, when the code CDₐₘₐₛ is scanned by the control unit-controlled automation machine AMA with the aid of the code-reader CDR, can be used - as the cited information (the second option) - by the control unit CTU for accessing the geometric and layout data GMD, LOD and possibly or if needed the meta-information MIF. The automation machine-scannable code CDₐₘₐₛ could be for example a "Quick response <QR>"-code, in which the reference information RIF, e.g. a link, is embedded.

The assembly arrangement AAM depicted in the FIGURE 4 cannot only be used for mounting - autonomously without any human intervention - the placement modules PLM in the course of equipping or assembling the switching cabinet/server rack SWC, SVR. Thus it is also possible to use the arrangement AAM for maintaining - also autonomously and without any human intervention - an already equipped or assembled switching cabinet/server rack SWC, SVR. So in the course of maintaining the already embedded placement modules PLM a defective replacement module PLM is replaced by the control unit-controlled automation machine AMA in the same way.

Alternatively, in the course of maintenance it is also possible to check an equipment or assembly status of the switching cabinet/server rack SWC, SVR and report the status back to some process tool.

## Claims

1. Method for automation machine-based equipping a switching cabinet (SWC) or server rack (SVR) with placement modules (PLM) or maintaining the placement modules (PLM), by which
**a)** the switching cabinet (SWC) or server rack (SVR) includes each at least one mounting rail (MR), in particular a hat-rail (HR) or DIN-rail (DIN-R), for mounting the placement modules (PLM),
**b)** for placing the modules (PLM) at least one control unit-controlled automation machine (AMA) is provided with
**bl)** geometric data (GMD) and layout data (LOD) of the switching cabinet (SWC) or server rack (SVR) or
**b2)** geometric data (GMD) and layout data (LOD) of the switching cabinet (SWC) or server rack (SVR) as well as meta-information (MIF) of the switching cabinet (SWC) or server rack (SVR) and the mounted modules (PLM),
**characterized by**:
**c)** mounting (mnt) in a force- and form-fitting connection (FFFC) with the mounting rail (MR, HR, DIN-R) as part of the switching cabinet (SWC) or server rack (SVR) a calibration-marker-module (CMM) with, in particular on its surface, an automation machine-detectable marker (MK_{amad}) to
**c1**) specify due to the mounting a 6D-pose in position and orientation of the mounted calibration-marker-module (CMM),
**c2)** mark due to the marker (MK_{amad}) the position and orientation of the calibration-marker-module (CMM) mounted onto the mounting rail (MR, HR, DIN-R) for a detection by the automation machine (AMA),
**c3)** calibrate the automation machine (AMA) due to the detection of the calibration-marker-module (CMM) for mounting the placement modules (PLM) in the course of equipping the switching cabinet (SWC) or server rack (SVR) exactly at a mounting location determined by mounting location data (MLD) referenced to all relative coordinate transformations (RCT) between the calibration-marker-module (CMM) and the placement modules (PLM) mounted onto the mounting rail (MR, HR, DIN-R) and based on, in particular due to data combining,
**c31)** pose data (PD) corresponding to the 6D-pose, the geometric data (GMD) and the layout data (LOD) or
**c32)** pose data (PD) corresponding to the 6D-pose, the geometric data (GMD) and the layout data (LOD) and the meta-information (MIF).

2. Method according to claim 1, **characterized in that** the calibration-marker-module (CMM) is clamped onto the mounting rail (MR, HR, DIN-R).

3. Method according to claim 1 or 2, **characterized in that**
the geometric and layout data (GMD, LOD) as well as the meta-information (MIF) are provided by an assembly data repository (ADRP).

4. Method according to one of the claims 1 to 3, **characterized in that**
an automation machine-scannable code (CDₐₘₐₛ), in particular a "Quick response <QR>"-code, including a reference information (RIF), e.g. a link, is used on the calibration-marker-module (CMM), in particular on its surface, for accessing the geometric and layout data (GMD, LOD) as well as the meta-information (MIF).

5. Method according to one of the claims 1 to 4, **characterized in that**
in the course of maintaining the placement modules (PLM) a defective replacement module (PLM) is replaced by the control unit-controlled automation machine (AMA).

6. Method according to one of the claims 1 to 5, **characterized in that**
the control unit-controlled automation machine (AMA) is a control unit-controlled robot, gantry or delta robot.

7. Assembly-support-unit (ASU) for automation machine-based equipping a switching cabinet (SWC) or server rack (SVR) with placement modules (PLM) or maintaining the placement modules (PLM), by which
**a)** the switching cabinet (SWC) or server rack (SVR) includes each at least one mounting rail (MR), in particular a hat-rail (HR) or DIN-rail (DIN-R), for mounting the placement modules (PLM),
**b)** for placing the modules (PLM) at least one control unit-controlled automation machine (AMA) is provided with
**b1)** geometric data (GMD) and layout data (LOD) of the switching cabinet (SWC) or server rack (SVR) or
**b2)** geometric data (GMD) and layout data (LOD) of the switching cabinet (SWC) or server rack (SVR) as well as meta-information (MIF) of the switching cabinet (SWC) or server rack (SVR) and the mounted modules (PLM),
**characterized by:**
**c)** a mounting component (MTC) and a calibration-marker-module (CMM) being functionally connected such that the calibration-marker-module (CMM) is mounted (mnt) in a force- and form-fitting connection (FFFC) with the mounting rail (MR, HR, DIN-R) via the mounting component (MTC) as part of the switching cabinet (SWC) or server rack (SVR) and wherein the calibration-marker-module (CMM) includes, in particular on its surface, an automation machine-detectable marker (MK_{amad}) to
**c1**) specify due to the mounting a 6D-pose in position and orientation of the mounted calibration-marker-module (CMM),
**c2)** mark due to the marker (MK_{amad}) the position and orientation of the calibration-marker-module (CMM) mounted onto the mounting rail (MR, HR, DIN-R) for a detection by the automation machine (AMA),
**c3)** calibrate the automation machine (AMA) due to the detection of the calibration-marker-module (CMM) for mounting the placement modules (PLM) in the course of equipping the switching cabinet (SWC) or server rack (SVR) exactly at a mounting location determined by mounting location data (MLD) referenced to all relative coordinate transformations (RCT) between the calibration-marker-module (CMM) and the placement modules (PLM) mounted onto the mounting rail (MR, HR, DIN-R) and based on, in particular due to data combining,
**c31)** pose data (PD) corresponding to the 6D-pose, the geometric data (GMD) and the layout data (LOD) or
**c32)** pose data (PD) corresponding to the 6D-pose, the geometric data (GMD) and the layout data (LOD) and the meta-information (MIF).

8. Assembly-support-unit (ASU) according to claim 7, **characterized in that**
the mounting component (MTC) is designed such that the calibration-marker-module (CMM) is clamped onto the mounting rail (MR, HR, DIN-R).

9. Assembly-support-unit (ASU) according to claim 7 or 8, **characterized in that**
the geometric and layout data (GMD, LOD) possibly or if needed the meta-information (MIF) are provided by an assembly data repository (ADRP).

10. Assembly-support-unit (ASU) according to one of the claims 7 or 9, **characterized in that**
the calibration-marker-module (CMM) includes, in particular on its surface, an automation machine-scannable code (CDₐₘₐₛ), in particular a "Quick response <QR>"-code, including a reference information (RIF), e.g. a link, which, when the code (CDₐₘₐₛ) is scanned by the control unit-controlled automation machine (AMA), is used by a control unit (CTU) of the control unit-controlled automation machine (AMA) for accessing the geometric and layout data (GMD, LOD) and possibly or if needed the meta-information (MIF).

11. Assembly-support-unit (ASU) according to one of the claims 7 or 10, **characterized in that**
in the course of maintaining the placement modules (PLM) a defective replacement module (PLM) is replaced by the control unit-controlled automation machine (AMA).

12. Assembly-support-unit (ASU) according to one of the claims 7 to 11, **characterized in that**
the control unit-controlled automation machine (AMA) is a control unit-controlled robot, gantry or delta robot.

13. Assembly arrangement (AAM) for automation machine-based equipping a switching cabinet (SWC) or server rack (SVR) with placement modules (PLM) or maintaining the placement modules (PLM), with
**a)** at least one mounting rail (MR), in particular a hat-rail (HR) or DIN-rail (DIN-R), of the switching cabinet (SWC) or server rack (SVR) for mounting the placement modules (PLM),
**b)** at least one automation machine (AMA), controlled by a control unit (CTU), for placing the modules (PLM), wherein the control unit (CTU) is connected with or assigned to an assembly data repository (ADRP) providing the control unit-controlled automation machine (AMA) with
**b1)** geometric data (GMD) and layout data (LOD) of the switching cabinet (SWC) or server rack (SVR) or
**b2)** geometric data (GMD) and layout data (LOD) of the switching cabinet (SWC) or server rack (SVR) as well as meta-information (MIF) of the switching cabinet (SWC) or server rack (SVR) and the mounted modules (PLM),
**characterized by:**
an assembly-support-unit (ASU) according to one of the claims 7 to 12, which forms a functional unit with the automation machine (AMA) and the control unit (CTU) such that the method according to one of the claims 1 to 6 is carried out.

14. Assembly arrangement (AAM) according to claim 13, **characterized in that**
the control unit-controlled automation machine (AMA) includes a camera (CAM) for detecting the automation machine-detectable marker (MK_{amad}) of the calibration-marker-module (CMM) .

15. Assembly arrangement (AAM) according to claim 13 or 14, **characterized in that**
the control unit-controlled automation machine (AMA) includes a code-reader (CDR) for scanning the automation machine-scannable code (CDₐₘₐₛ) of the calibration-marker-module (CMM) .
